(19) Europäisches Patentamt

European Patent Office

Office européen des brevets

(11) **EP 1 679 574 A1**

(12) **EUROPEAN PATENT APPLICATION**

(43) Date of publication:
**12.07.2006 Bulletin 2006/28**

(51) Int Cl.:
***G06F 1/20*** (2006.01)

(21) Application number: **05017966.2**

(22) Date of filing: **18.08.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventors:<br>• **Nagata, Yasuhiko,**<br>**Hitachi Car Engineering Co Ltd**<br>**Hitachinaka-shi**<br>**Ibaraki 312-0062 (JP)**<br>• **Tanabe, Itaru,**<br>**Hitachi Car Engineering Co Ltd**<br>**Hitachinaka-shi**<br>**Ibaraki 312-0062 (JP)** |
| (30) Priority: **04.01.2005 JP 2005000019** | |
| (71) Applicant: **HITACHI, LTD.**<br>**Chiyoda-ku**<br>**Tokyo 100-8280 (JP)** | (74) Representative: **Beetz & Partner**<br>**Patentanwälte**<br>**Steinsdorfstrasse 10**<br>**D-80538 München (DE)** |

(54) **Control apparatus and method of operating same**

(57)    The present invention relates to a control apparatus (11) that measures an instructed current value from a CPU (12) to an element mounted in the control apparatus (11) and having a concern of heat generation (typically, a current control element), calculates power consumption from the measured current value and a monitored source voltage, and predicts a temperature rise of the control apparatus by multiplying the power consumption by a thermal resistance parameter (16) of the control apparatus (11). The control apparatus (11) can be set into a fail safe mode for protection when it is estimated that the control apparatus (11) could be heated beyond an upper limit of a guaranteed operation temperature range defined therefore.

FIG. 1

EP 1 679 574 A1

**Description**

BACKGROUND OF THE INVENTION

The present invention relates to a control apparatus and a method of operating the same, and more particularly, to techniques for setting the control apparatus itself into a fail safe mode when the control apparatus is likely to operate out of a guaranteed operation temperature range thereof due to the control apparatus itself heated by a failed element contained therein, or due to an increase in the ambient temperature due to a fault in an associated system.

In the prior art, Japanese Patent No. 3371382, for example, discloses monitoring a control apparatus for the temperature by a temperature sensor mounted in the control apparatus, and setting the control apparatus into a fail safe mode when the monitored temperature satisfies a predetermined condition.

SUMMARY OF THE INVENTION

The prior art has the disadvantage of the inability to correctly set the control apparatus into the fail safe mode when the temperature sensor itself mounted in the control apparatus fails. Also, when the control apparatus contains a plurality of elements which have a concern of heat generation, a plurality of sensors are required corresponding to the respective elements which have the concern of heat generation. In this event, the requirement of a plurality of temperature sensors causes a problem of an increase in the cost and the area of mounting the sensors. Also, as described above, from a viewpoint of the reliability of the temperature sensor itself, the employment of a plurality of sensors which are relied on determining whether or not the control apparatus should be set into the fail safe mode increases the possibility of erroneous determination due to a fault of the temperature sensors themselves.

The present invention includes means for measuring an instructed current value from a CPU to an element mounted in a control apparatus and having a concern of heat generation (typically, a current control element), and/or means for calculating power consumption from the measured current value and a monitored source voltage, and/or predicting a temperature rise of the control apparatus by multiplying the power consumption by a thermal resistance parameter of the control apparatus. Thus, the CPU can predict a rise in the temperature of the control apparatus. When the CPU determines that the predicted temperature exceeds a guaranteed operation temperature range defined for the control apparatus, the CPU can sets the control apparatus into a fail safe mode which involves, for example, a reduction in the current conducted to the element which has a concern of heat generation, or breakage of the power supply to the control apparatus.

According to the present invention, an increase in the temperature of the control apparatus can be readily estimated from the ambient temperature of the control apparatus, a current value instructed by the CPU to the element mounted in the control apparatus and having a concern of heat generation, and/or the thermal resistance of the control apparatus. Therefore, even if the guaranteed operation temperature range defined for the control apparatus is exceeded by some reason, the control apparatus can be set into the fail safe mode before the control apparatus is heated beyond the guaranteed operation temperature range defined therefore.

BRIEF DESCRIPTION OF THE DRAWINGS

Fig. 1 is a block diagram illustrating the configuration of a control apparatus according to one embodiment of the present invention;
Fig. 2 is a block diagram illustrating the configuration of a prior art control apparatus;
Fig. 3 is a graph for explaining one example of the prior art control apparatus.
Fig. 4 is a graph for explaining one embodiment of the control apparatus according to the present invention;
Fig. 5 is a graph for explaining one embodiment of the control apparatus according to the present invention;
Fig. 6 is a flow chart for explaining the control apparatus according to one embodiment of the present invention;
Fig. 7 is a block diagram illustrating the configuration of a control apparatus according to other embodiment of the present invention;
Fig. 8 is a block diagram illustrating the configuration of a control apparatus according to other embodiment of the present invention;
Fig. 9 is a block diagram illustrating the configuration of a control apparatus according to other embodiment of the present invention;
Fig. 10 is a flow chart illustrating a sequence of operations performed by the control apparatus according to other embodiment of the present invention;
Fig. 11 is a block diagram illustrating the configuration of a control apparatus according to other embodiment of the present invention; and
Fig. 12 is a block diagram illustrating the configuration of a control apparatus according to other embodiment of the present invention.

DESCRIPTION OF THE PREFERRED EMBODIMENTS

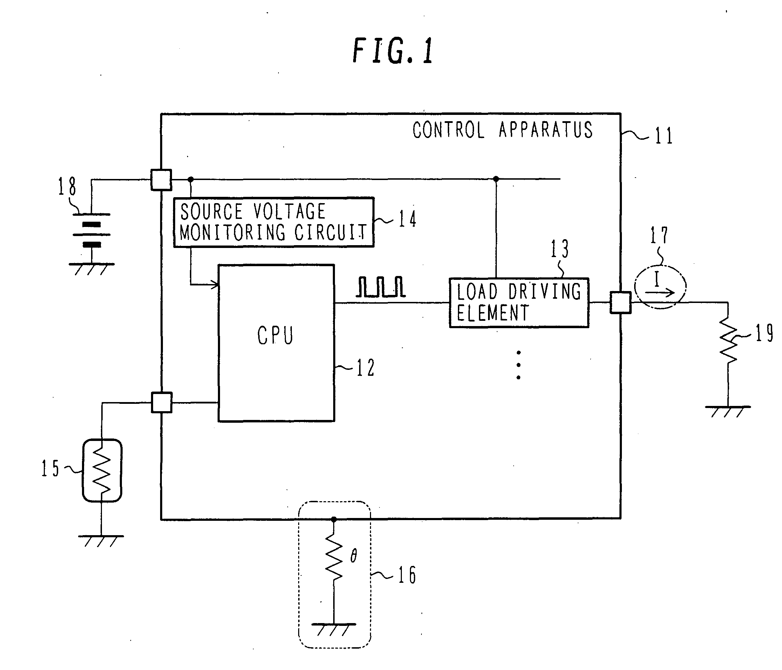

In the following, one embodiment of the present invention will be described with reference to Fig. 1.

A control apparatus 11 comprises a power supply 18 for powering the control apparatus 11, an ambient temperature sensor 15 for detecting the ambient temperature out of the control apparatus 11, a CPU 12 for capturing temperature information from the ambient temperature sensor 15 to perform operational processing based on predetermined conditions, a load driving element 13 connected to the CPU 12 for driving a load based on information processed in the CPU 12, a coil load 19 driven by the load driving element 13, and a source voltage monitoring circuit 14 for monitoring a source voltage supplied to the control apparatus 11. The control apparatus 11 is characterized by previously having the knowledge of the thermal resistance $\theta$ [°C/W] 16 of the control apparatus 11. Here, the control apparatus 11 may control, for example, an internal combustion engine.

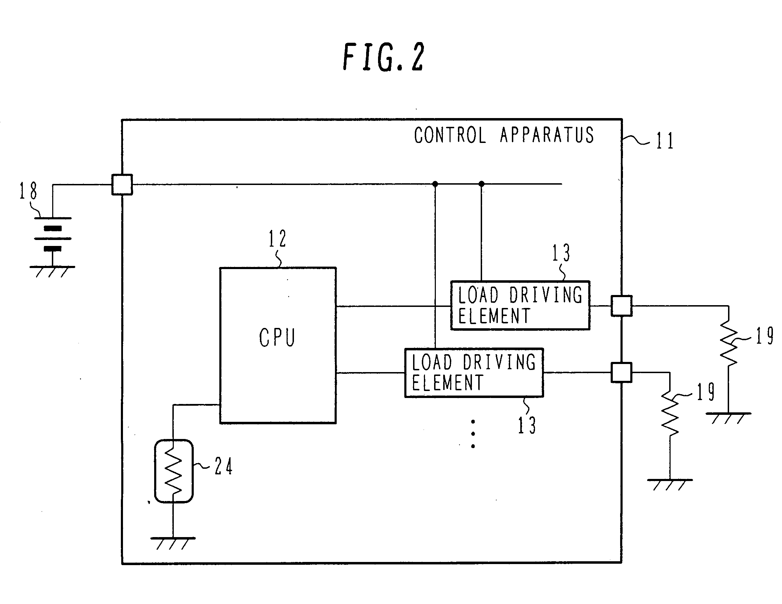

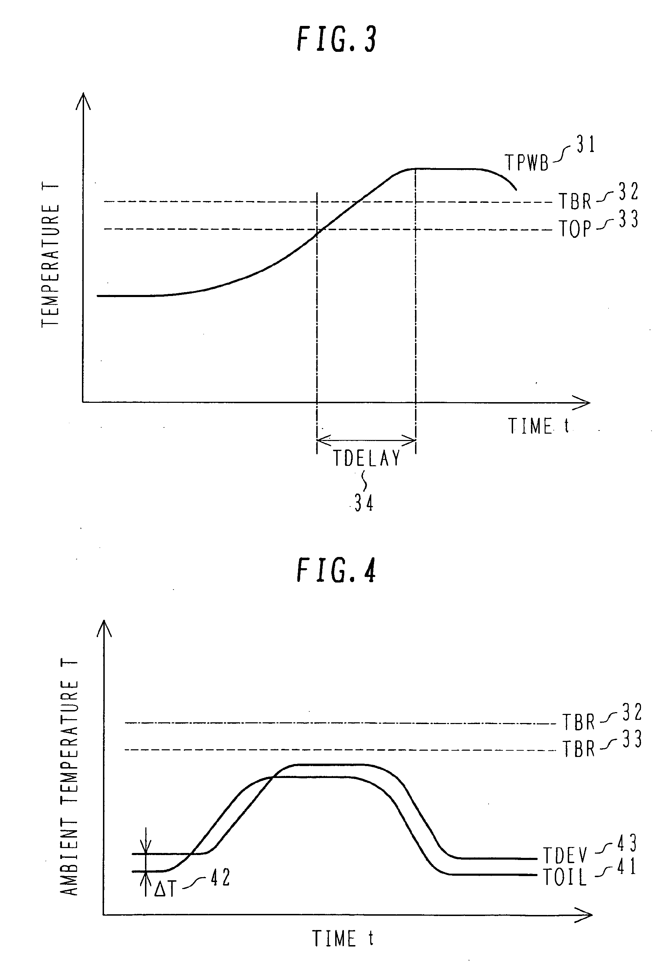

Referring next to Figs. 2 and 3, a description will be given of the conventional fail safe technique associated with a control apparatus when the guaranteed operation temperature range defined for the control apparatus is exceeded by some cause.

Fig. 2 is an exemplary control apparatus which employs the conventional fail safe technique.

The control apparatus 11 comprises a power supply 18 for powering the control apparatus 11, a substrate temperature sensor 24 for detecting the ambient temperature inside the control apparatus 11, a CPU 12 for capturing temperature information from the substrate temperature sensor 12 to process the information based on predetermined conditions, a load driving element 13 connected to the CPU 12 for driving a load based on the information processed by the CPU 12, a coil load 19 driven by the load driving element 13, and a source voltage monitoring circuit 14 for monitoring a source voltage provided to the control apparatus 11.

Fig. 3 is a graph showing the relationship between the temperature inside the control apparatus 11 and the temperature outside the control apparatus 11 when the control apparatus 11 is heated.

Elements in Fig. 3 include a substrate temperature TPWB 31 inside the control apparatus 11 detected by the substrate temperature sensor 24 which is grounded inside the control apparatus 11, a temperature TBR 32 at which an internal element of the control apparatus 11 can fail, an upper limit value TOP 33 of the guaranteed operation temperature range defined for the control apparatus 11, and a delay time TDELAY 34 until the temperature is balanced after the control apparatus inside temperature TPWB 31 exceeds the upper limit value TOP 33 of the guaranteed operation temperature range defined for the control apparatus 11.

A description will be next given of a sequence of operations until detection of a condition for a transition to a fail safe mode.

First, when the control apparatus 11 is correctly operating, the CPU 12 drives a load in accordance with a control target value processed thereby as long as the control apparatus inside temperature TPW 31 does not exceeds the upper limit value TOP 33 of the guaranteed operation temperature range. Next, when a change in the load driving condition of the control apparatus 11 causes an increase in a load current 17 or when the temperature external to the control apparatus 11 rises for some reason, the control apparatus internal temperature TPWB 31 begins to rise. If the control apparatus inside substrate temperature TPWB 31 continues to rise as it is, the control apparatus inside substrate temperature TPWB 31 reaches the upper limit value TOP 33 of the guaranteed operation temperature range defined for the control apparatus 11. In this event, the CPU 12 finds that the control apparatus inside substrate temperature TPWB 31 has reached the upper limit value TOP 33 of the guaranteed operation temperature range defined for the control apparatus 11, making a transition to fail safe in order to protect the control apparatus 11.

However, in this event, if a delay time TDELAY 34 occurs until the temperature is balanced after the control apparatus inside temperature TPWB 31 exceeds the upper limit value TOP 33 of the guaranteed operation temperature range defined for the control apparatus 11, the control apparatus inside substrate temperature TPWB 31 continues to rise, leading to a problem that elements contained in the control apparatus 11 are exposed to a temperature TBR 32 at which they can fail, or a problem that elements contained in the control apparatus 11 fail due to the temperature exceeding TBR 32. The delay time TDELAY 34 may be caused by the control apparatus inside substrate temperature TPWB 31 continuing to rise even after a transition to fail safe due to the thermal capacitance of the control apparatus 11, due to a time difference from the control apparatus inside substrate temperature TPWB 31 suddenly increasing beyond the upper limit value TOP 33 of the guaranteed operation temperature range defined for the control apparatus 11 to an update of the temperature information made by the CPU 12, and due to a time difference from the load driving element 13 heated beyond the upper limit value TOP 33 of the guaranteed operation temperature range defined for the control apparatus 11 to the arrival of the temperature to the substrate temperature sensor 24 grounded to the inside of the control apparatus 11.

Next, a description will be given of a fail safe method according to the present invention. Fig. 4 is a graph showing the relationship between an estimated control apparatus inside temperature TDEV 43 and a value TOIL 41 of the ambient temperature sensor 15 in the configuration of Fig. 1. An element ΔT42 in Fig. 4 represents an estimated rise in temperature of the control apparatus 11 determined by the load driving condition, and a previously found parameter associated with the thermal resistance θ of the control apparatus 11. Next, a flow up to fail safe will be described. A temperature rise value ΔT [°C] of the control apparatus 11 is expressed by Equation (1):

$$\Delta T \ [^{\circ}C] = (V \times I) \ [W] \ x \ \theta \ [^{\circ}C/W] \qquad \ldots (1)$$

where V: Monitored Source Voltage Value;

I: Load Current 17; and

θ: Previously Found Thermal Resistance of Control Apparatus 11.

Thus, the value of the estimated control apparatus inside temperature is expressed by Equation (2):

$$TDEV \ [^{\circ}C] = TO1L \ [^{\circ}C] + \Delta T \ [^{\circ}C] \qquad \ldots (2)$$

From Equation (2), when the load driving condition is fixed, the estimated control apparatus inside temperature TDEV 43 is determined by the ambient temperature TOIL 41 of the control apparatus 11, and changes with a constant temperature difference ΔT42.

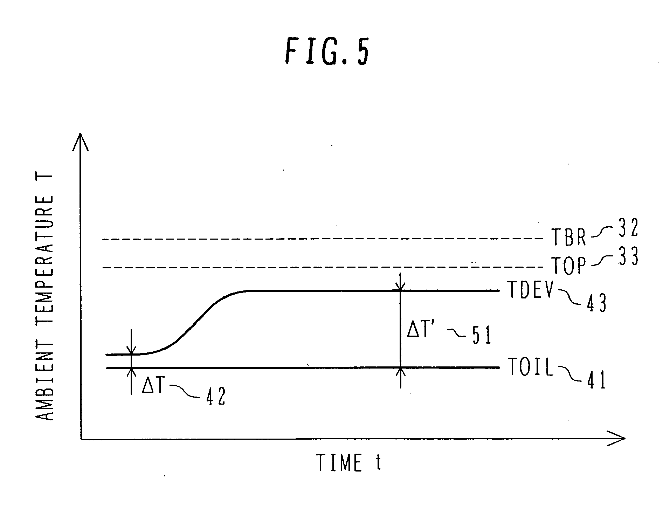

Fig. 5 is a graph showing the relationship between the estimated control apparatus inside temperature TDEV 43 and the value TOIL 41 of the ambient temperature sensor 15 in the configuration of Fig. 1. ΔT'51 in Fig. 5 represents an estimated temperature rise value of the control apparatus 11, which is predicted when the load driving condition is modified.

For changing the load driving condition, the CPU 12 calculates an estimated temperature rise value ΔT'51, which is predicted after the change in the load driving condition, using Equation (1), and calculates the estimated control apparatus inside temperature TDEV 43 using Equation (2). In this event, when the estimated control apparatus inside temperature TDEV 43 is estimated to exceed the upper limit value TOP 33 of the guaranteed operation temperature range defined for the control apparatus 11, the CPU 12 transitions to fail safe for purposes of protecting the control apparatus 11. The fail safe used herein involves shutting off the load current 17, or changing no load driving condition, or changing the load driving condition such that the estimated control apparatus inside temperature TDEV 43 does not exceed the upper limit value TOP 33 of the guaranteed operation temperature range defined for the control apparatus 11.

In the present invention, rather than a transition to the fail safe mode after confirming that the control apparatus inside substrate temperature TPWB 31 exceeds the upper limit value TOP 33 of the guaranteed operation temperature range, the estimated control apparatus inside temperature TDEV 43 is estimated from control conditions such as the ambient temperature TOIL 41 and the load driving condition of the control apparatus 11, and a transition can be made to the fail safe mode beforehand at the time the estimated control apparatus inside temperature TDEV 43 is predicted to exceed the upper limit value TOP 33 of the guaranteed operation temperature range defined for the control apparatus 11, so that the control apparatus 11 will not exceed the upper limit value of the guaranteed operation temperature range. Also, the present invention can eliminate the substrate temperature sensor 35 for detecting the temperature inside the control apparatus 11. General temperature sensors used in the control apparatus 11 include a thermistor. This part, though relatively inexpensive, has a problem that the reliability must be ensured for the thermistor itself in a high temperature range, for example, exceeding 125 °C.

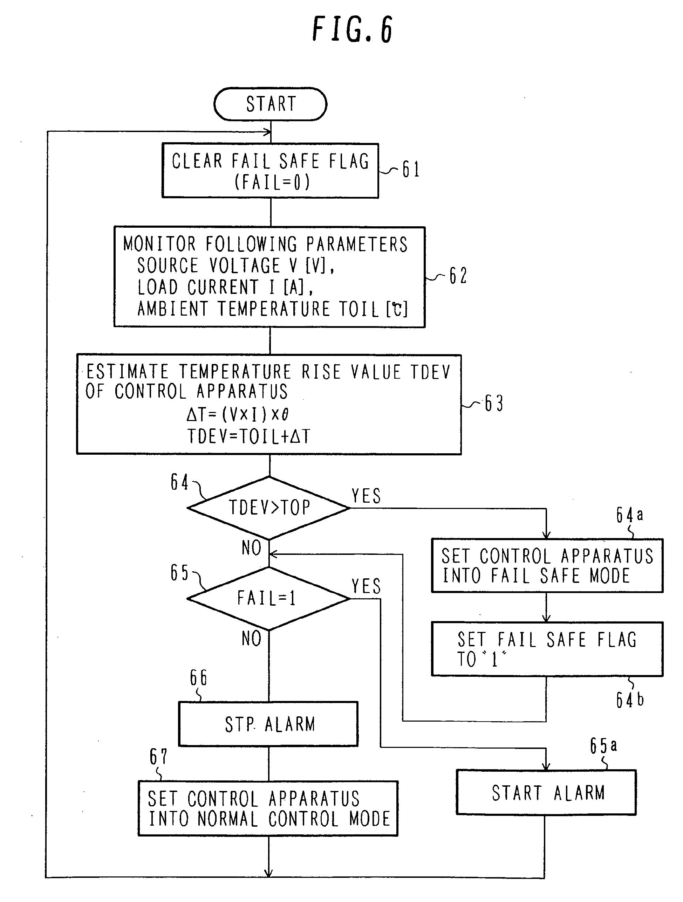

Next, one embodiment of the present invention will be described with reference to a flow chart in Fig. 6. This flow chart includes a block 61 at which a fail safe flag for determining whether the control apparatus 11 is in the fail safe mode is set to "0", a block 62 at which each parameter is monitored, a block 63 at which a temperature rise value of the control apparatus 11 is estimated based on the parameters monitored at the block 62, a branch block 64 at which it is determined whether or not the temperature rise value of the control apparatus 11 exceeds the guaranteed operation temperature range defined therefore, a block 64a at which a transition is made to the fail safe mode, a block 64b at which the fail safe flag is set to "1," and a branch block 65 at which it is determined whether or not the fail safe flag is set to "1." First, a description will be given of the case where the estimated control apparatus inside temperature TDEV 43 is estimated not to exceed the upper limit value TOP 33 of the guaranteed operation range defined for the control apparatus 11. As this control is started, the fail safe flag FAIL is set to "0" (FAIL="0") (block 61). Next, the control proceeds to the block 62 at which parameters required to estimate the temperature inside the control apparatus 11 are monitored. Parameters monitored herein include a source voltage V [V], a load current I [A], and an ambient temperature TOIL [°C]. Next, the control proceeds to the block 63 at which a temperature rise value of the control apparatus is estimated based on the parameters monitored at the block 62. Here, the estimated temperature rise value TDEV of the control apparatus 11 is calculated based on the monitored parameters. Next, the control proceeds to the branch block 64 at which it is determined whether or not the temperature rise value of the control apparatus 11 exceeds the upper limit value TOP 33 of the guaranteed operation temperature range defined for the control apparatus 11. Here, it is determined whether or not the estimated control apparatus inside temperature TDEV 43 exceeds the upper limit value TOP 33 of the guaranteed operation temperature range defined for the control apparatus 11. Here, since the description is made on the assumption that the estimated control apparatus inside temperature TDEV 43 does not exceed the upper limit value TOP 33 of the guaranteed operation temperature range defined for control apparatus 11, the control proceeds to the branch block 65. At the branch block 65, the status of the fail safe flag FAIL is determined. In this event, since FAIL is "0" (FAIL="0"), the control proceeds to a block 66. At the block 66, an alarm is stopped, followed by the control proceeding to a block 67. At the block 67, since the fail safe flag FAIL is "0" (FAIL="0"), the control proceeds to a normal control mode, and returns to the block 61.

Next, a description will be given of the case where the estimated control apparatus inside temperature TDEV 43 is estimated to exceed the upper limit value TOP 33 of the guaranteed operation temperature range defined for the control apparatus 11.

As this control is started, the fail safe flag FAIL is set to "0" (FAIL="0") (block 61). Next, the control proceeds to the block 62 at which the parameters required to estimate the temperature inside the control apparatus 11 are monitored. Parameters monitored herein include the source voltage V [V], the load current I [A], and the ambient temperature TOIL [°C]. Next, the control proceeds to the block 63 at which a temperature rise value of the control apparatus 11 is estimated based on the parameters monitored at the block 62. Here, the estimated temperature rise value TDEV of the control apparatus 11 is calculated based on the monitored parameters. Next, the control proceeds to the branch block 64 at which it is determined whether or not the temperature rise value of the control apparatus 11 exceeds the upper limit value TOP 33 of the guaranteed operation temperature range defined for the control apparatus 11. It is determined herein whether or not the estimated control apparatus inside temperature TDEV 43 exceeds the upper limit value TOP 33 of the guaranteed operation temperature range defined for the control apparatus 11. Here, since the description is made on the assumption that the estimated control apparatus inside temperature TDEV 43 exceeds the upper limit value TOP 33 of the guaranteed operation temperature range defined for the control apparatus 11, the control proceeds to the block 64a. At the block 64a, the CPU 12 transitions to the fail safe mode for purposes of protecting the control apparatus 11. The fail safe mode used herein involves shutting off the load current 17, or changing no load driving condition, or changing the load driving condition such that the estimated control apparatus inside temperature TDEV 43 does not exceed the upper limit value TOP 33 of the guaranteed operation temperature range defined for the control apparatus 11. For the control apparatus which is aware of a thermal resistance and a load current of each of load driving elements mounted in the control apparatus and having a concern of heat generation, the fail safe mode involves breaking the load current to each of the load driving elements, leaving the load driving condition unchanged, or modifying the load driving condition for each of the load driving elements such that it is not heated beyond the upper limit value TOP 33 of the guaranteed operation temperature range defined for the control apparatus 11. Next, the control proceeds to the block 64a. At the block 64a, since the estimated control apparatus inside temperature TDEV 43 is estimated to exceed the upper limit value TOP 33 of the guaranteed operation temperature range defined for the control apparatus 11, the fail safe flag FAIL is set to "1" (FAIL="1") . Next, the control proceeds to the branch block 65. At the branch block 65, the status of the fail safe flag FAIL is determined. In this event, since the fail safe flag FAIL is set to "1," the control proceeds to the block 65a. At the bock 65a, an alarm is started because of the transition to the fail safe mode, followed by the control returning to the block 61.

In this embodiment, the fault flag is set to "0" when the control apparatus 11 is normal, and to "1" when the control apparatus 11 fails, but the fault flag may be set to reverse values without any problem, as a matter of course. Also, in this embodiment, when the estimated control apparatus inside temperature TDEV 43 exceeds the upper limit value TOP 33 of the guaranteed operation temperature range defined for the control apparatus 11, a means may be provided for alarming to a remote control apparatus by the user or using a communication circuit, in which case the following advantages can be provided.

When the estimated control apparatus inside temperature TDEV 43 exceeds the upper limit value TOP 33 of the guaranteed operation temperature range defined for the control apparatus 11, the user is notified that the control apparatus 11 transitions to a fail safe mode, for example, by lighting or blinking an alarm light. While the alarm light can be directly driven by the control apparatus 11, it may be lit by a remote control apparatus using a communication circuit. In the latter case, the remote control apparatus can recognize that the control apparatus 11 has transitioned to the fail safe mode. Based on the alarm, the user or the remote control apparatus can take an appropriate action, for example, power off the control apparatus 11. The alarming means can use an alarming sound instead of or in combination with the alarming light, as a matter of course.

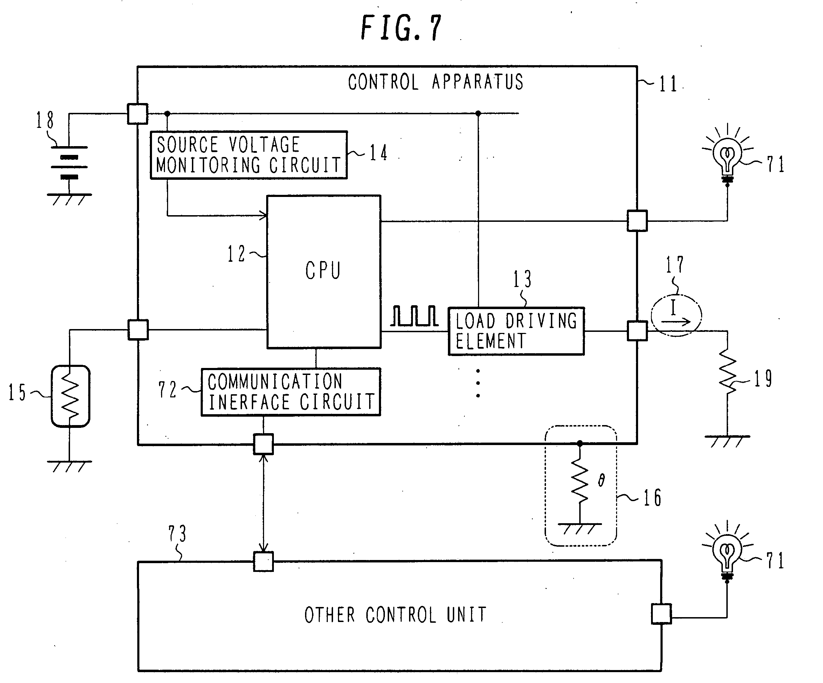

Next, another embodiment of the present invention will be described with reference to Fig. 7. Fig. 7 illustrates a control apparatus according to another embodiment of the present invention. In this embodiment, the control apparatus 11 comprises an alarming light 71 for alarming the user; and an interface circuit 72 for communicating with a remote control apparatus 73. This embodiment is characterized over the foregoing embodiment of Fig. 1 in that the control apparatus 11 comprises a means for alarming to the remote control apparatus 73 by the user or using a communication circuit when the estimated control apparatus inside temperature TDEV 43 exceeds the upper limit value TOP 33 of the guaranteed operation temperature range defined for the control apparatus 11. It should be understood that the alarming light 71 may be driven by the control apparatus 11 or by the remote control apparatus 72 through the interface circuit 72 for communicating with the remote control apparatus 72 without any problems.

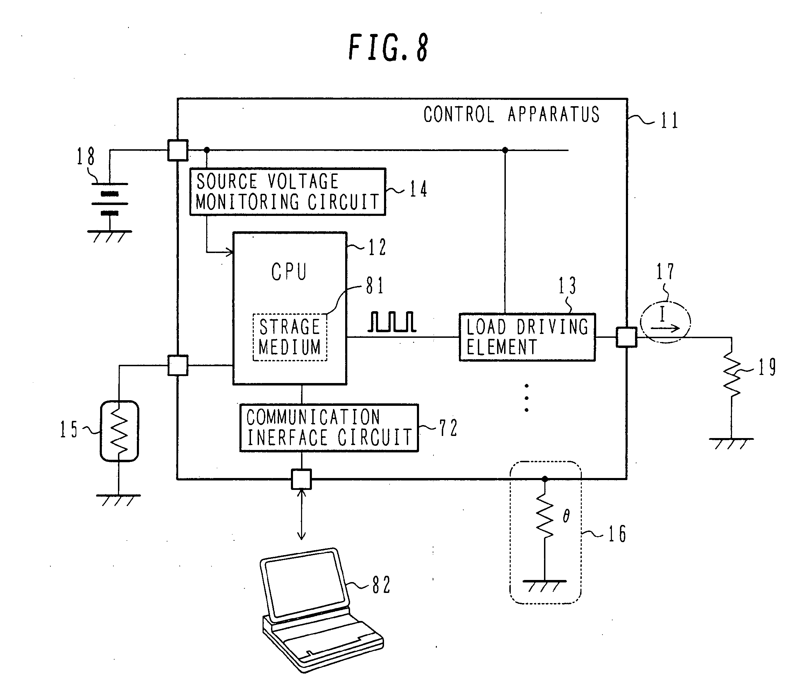

Next, another embodiment of the present invention will be described with reference to Fig. 8. Fig. 8 illustrates a control apparatus according to another embodiment of the present invention. In this embodiment, the control apparatus 11 comprises a storage medium 81 for storing information indicative of a transition to the fail safe mode; and a monitoring device 82 for permitting the user to confirm the fail safe information stored in the storage medium 81 using the interface circuit 72 for communicating with a remote control apparatus. In the following, a description will be given of the control apparatus according to this embodiment of the present invention. It should be understood that the fail safe information can be stored in a different storage medium external to the control apparatus 11 using the communication interface circuit 72. This embodiment is characterized over the aforementioned embodiment of Fig. 1 in that the control apparatus 11 comprises a means for storing the fail safe information using the storage medium 81 built in a CPU or mounted in the control apparatus 11 when the estimated control apparatus inside temperature TDEV 43 exceeds the upper limit TOP 33 of the guaranteed operation temperature range defined for the control apparatus 11, so that the fail safe information can be confirmed at a later time.

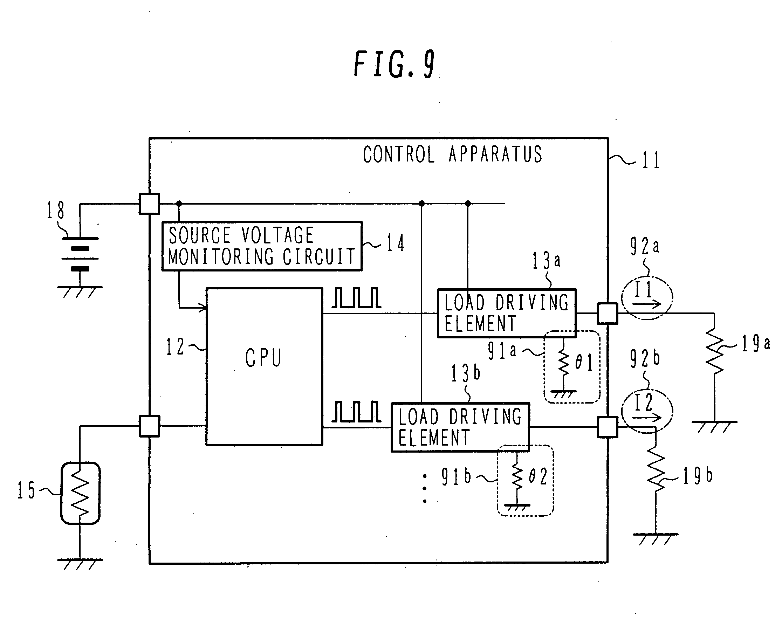

Next, a further embodiment of the present invention will be described with reference to Fig. 9. Fig. 9 illustrates a control apparatus according to a further embodiment of the present invention. In this embodiment, respective load driving elements 13a, 13b have terminal resistances ($\theta$) 91a, 91b, respectively, and load currents 92a, 92b flow through the respective load driving elements 13a, 13b. The aforementioned embodiment of Fig. 1 has been described in connection with the thermal resistance $\theta$ 16 of the overall control apparatus 11 which is used to calculate the temperature rise value of the control apparatus 11, whereas this embodiment includes the load driving elements 13a, 13b, the thermal resistances ($\theta$) 91a, 91b of which have been previously known and used to calculate the temperature rise value of the control apparatus 11. In this embodiment, the temperature rise value $\Sigma\Delta T$ [°C] of the control apparatus 11 is expressed by Equation (3):

$$\Sigma\Delta T \ [°C] = \Delta T1 + \Delta T2 + ... + \Delta Tn \qquad ...(3)$$

where $\Delta T1 = (V \times I1)$ [W] x $\theta 1$ [°C/W]

$\Delta T2 = (V \times I2)$ [W] x $\theta 2$ [°C/W]
$\Delta Tn = (V \times In)$ [W] x $\theta n$ [°C/W]
V: Monitored Source Voltage Value;
$\Delta T1, \Delta T2,..., \Delta Tn$: Estimated Temperature Rise Value of Each Load Driving Element;
$\theta 1, \theta 2, ..., \theta n$: Previously Known Thermal Resistance of Each Lad Driving Element.

Thus, the value of the estimated control apparatus inside temperature TDEV 43 is expressed by Equation (4):

$$TDEV \ [°C] = T01L \ [°C] + \Sigma\Delta T \ [°C] \qquad ... (4)$$

For modifying the load driving condition, the CPU 12 calculates an estimated temperature rise value $\Delta T'51$ of the control apparatus 11 predicted after the modification in the load driving condition using Equation(3),and calculates the estimated control apparatus inside temperature 43 using Equation (4). In this event, when it is estimated that the estimated control apparatus inside temperature TDEV 43 exceeds the upper limit value TOP 33 of the guaranteed operation temperature range defined for the control apparatus 11, the CPU 12 transitions to the fail safe mode for purposes of protecting the control apparatus 11. This embodiment is characterized in that a thermal resistance and a load current are previously measured for each of a plurality of load driving elements which are mounted in the control apparatus 11 and have a concern of heat generation, such that a fail safe mode transition condition can be individually set for each of the load driving elements. In this way, the fail safe mode involves breaking the load current, leaving the load driving condition unchanged, or modifying the load driving condition for each of the load driving elements such that it does not exceed the upper limit value TOP 33 of the guaranteed operation temperature range defined for the control apparatus 11. For implementing the fail safe mode according to the present invention using the prior art, a plurality of temperature sensors are required such that the respective temperature sensors are associated with the respective load driving elements. In this case, the resulting control apparatus will be accompanied by such problems as an increase in the cost and the part mounting area, an increase in a signal processing load on the CPU caused by signals from the plurality of temperature sensors inputted to the CPU, and shortage of analog input terminals. Also, from a viewpoint of the reliability, the employment of a plurality of temperature sensors for determining whether or not the control apparatus should be set into the fail safe mode correspondingly increases the possibility of erroneous temperature detections due to possible faults of the temperature sensor themselves.

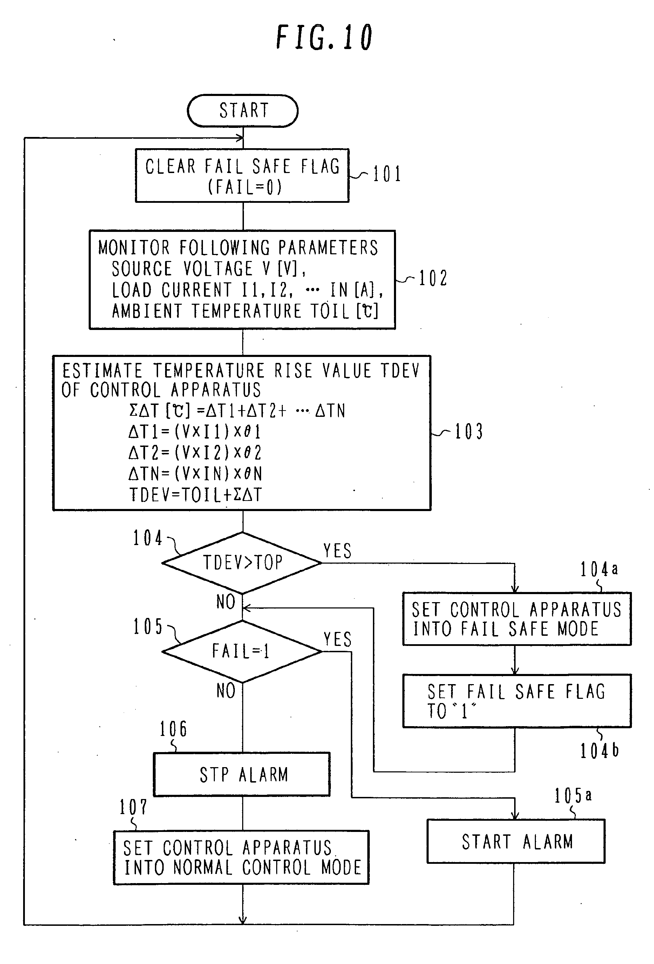

Next, one embodiment according to the present invention will be described with reference to a flow chart of Fig. 10.

The illustrated flow chart comprises a block 101 at which a fail safe flag for determining whether the control apparatus 11 is in the fail safe mode is set to "0", a block 72 at which each parameter is monitored, a block 103 at which a temperature rise value of the control apparatus 11 is estimated based on the parameters monitored at the block 102, a block 104 at which it is determined whether or not the temperature rise value of the control apparatus 11 exceeds the guaranteed operation temperature range defined for the control apparatus 11, a block 104a at which a transition is made to the fail safe mode, a block 104b at which the fail safe flag is set to "1", and a branch block 105 at which it is determined whether or not the fail safe flag is set. First, a description will be given of the case where an estimated control apparatus inside temperature TDEV 43 does not exceed the upper limit value TOP 33 of the guaranteed operation temperature range defined for the control apparatus 11. As this control is started, the fail safe flag FAIL is set to "0" (FAIL="0") (block 101). Next, the control proceeds to the block 102 at which the parameters required to estimate the temperature inside the control apparatus 11 are monitored. Parameters monitored herein include the source voltage V [V], the load current I1+I2+ ... In [A], and the ambient temperature TOIL [°C] . Next, the control proceeds to the block 103 at which a temperature rise value of the control apparatus 11 is estimated based on the parameters monitored at the block 102. Here, an estimated temperature rise value TDEV of the control apparatus 11 is calculated based on the monitored parameters. Next, the control proceeds to the branch block 104 at which it is determined whether or not the temperature rise value of the control apparatus 11 exceeds the upper limit value TOP 33 of the guaranteed operation temperature range defined for the control apparatus 11. Here, it is determined whether or not the estimated control apparatus inside temperature TDEV 43 exceeds the upper limit value TOP 33 of the guaranteed operation temperature range defined for the control apparatus 11. Here, since the description is made on the assumption that the estimated control apparatus inside temperature TDEV 43 exceeds the upper limit value TOP 33 of the guaranteed operation temperature range defined for the control apparatus 11, the control proceeds to the block 105. At the branch block 105, the status of the fail safe flag FAIL is determined. Since FAIL="0" in this scenario, the control proceeds to a block 106. At the block 106, an alarm is stopped, followed by the control proceeding to a block 107. At the block 107, since the fail safe flag FAIL is "0" (FAIL="0"), the control proceeds to a normal control mode, and returns to the block 101.

Next, a description will be given of the case where the estimated control apparatus inside temperature TDEV 43 is estimated to exceed the upper limit value TOP 33 of the guaranteed operation temperature range defined for the control apparatus 11.

As this control is started, the fail safe flag FAIL is set to "0" (FAIL="0") (block 101). Next, the control proceeds to the block 102 at which the parameters required to estimate the temperature inside the control apparatus 11 are monitored. Here, the source voltage V [V], the load current I [A], and the ambient temperature TOIL [°C] are monitored. Next, the control proceeds to the block 103 at which a temperature rise value of the control apparatus 11 is estimated based on the parameters monitored at the block 102. Here, an estimated temperature rise value TDEV of the control apparatus 11 is calculated based on the monitored parameters. Next, the control proceeds to the branch block 104 at which it is determined whether or not the temperature rise value of the control apparatus 11 exceeds the upper limit value TOP 33 of the guaranteed operation temperature range defined for the control apparatus 11. It is determined herein whether or not the estimated control apparatus inside temperature TDEV 43 exceeds the upper limit value TOP 33 of the guaranteed operation temperature range defined for the control apparatus 11. Here, since the description is made on the assumption that the estimated control apparatus inside temperature TDEV 43 exceeds the upper limit value TOP 33 of the guaranteed operation temperature range defined for the control apparatus 11, the control proceeds to the block 104a. At the block 104a, the CPU 12 transitions to the fail safe mode for purposes of protecting the control apparatus 11. The fail safe mode used herein involves shutting off the load current 17, or leaving the load driving condition unchanged, or changing the load driving condition such that the estimated control apparatus inside temperature TDEV 43 does not exceed the upper limit value TOP 33 of the guaranteed operation temperature range defined for the control apparatus 11. For the control apparatus which is aware of a thermal resistance and a load current of each of load driving elements mounted in the control apparatus and having a concern of heat generation, the fail safe mode involves breaking the load current to each of the load driving elements, leaving the load driving condition unchanged, or modifying the load driving condition for each of the load driving elements such that it is not heated beyond the upper limit value TOP 33 of the guaranteed operation temperature range defined for the control apparatus 11. Next, the control proceeds to the block 104a. At the block 104a, since the estimated control apparatus inside temperature TDEV 43 is estimated to exceed the upper limit value TOP 33 of the guaranteed operation temperature range defined for the control apparatus 11, the fail safe flag FAIL is set to "1" (FAIL="1"). Next, the control proceeds to the branch block 105. At the branch block 105, the status of the fail safe flag FAIL is determined. In this event, since the fail safe flag FAIL is set to "1," the control proceeds to the block 105a. At the block 105a, an alarm is started because of the transition to the fail safe mode, followed by the control returning to the block 101.

In this embodiments, the fail safe flag is set to "1" at an normal condition, being set to "0" at an abnormal condition. The fail safe flag, however, maybe set to "0" at an normal condition, being set to "1" at an abnormal condition. Further, in the embodiment, an alarm means can be provided. This alarm means executes an alarm operation for indicating the alarm to other control apparatus by a user or a communication circuit when the estimated control apparatus inside temperature TDEV43 exceeds the upper limit value TOP33 of the granted operation temperature of the control apparatus. The effect can be obtained by installing the above-mentioned alarm means.

The fail mode conversion is indicated to a user by lighting or flashing an alarm light, for example when the estimated control apparatus inside temperature TDEV43 exceeds the upper limit value TOP33 of the granted operation temperature of the control apparatus . The alarm light can be driven by the control apparatus 11 directly. Alternately, the alarm light may be lightened by other control apparatus through the communication circuit. In this case, other control circuit can recognize that the mode of the control apparatus is shifted to the fail safe mode. The user and other control apparatus can execute suitable proceeding Such as turning off to the power supply of the control apparatus 11. Alarm sound can be used in place of the alarm light. Further, ALARM sound can be used with the alarm light.

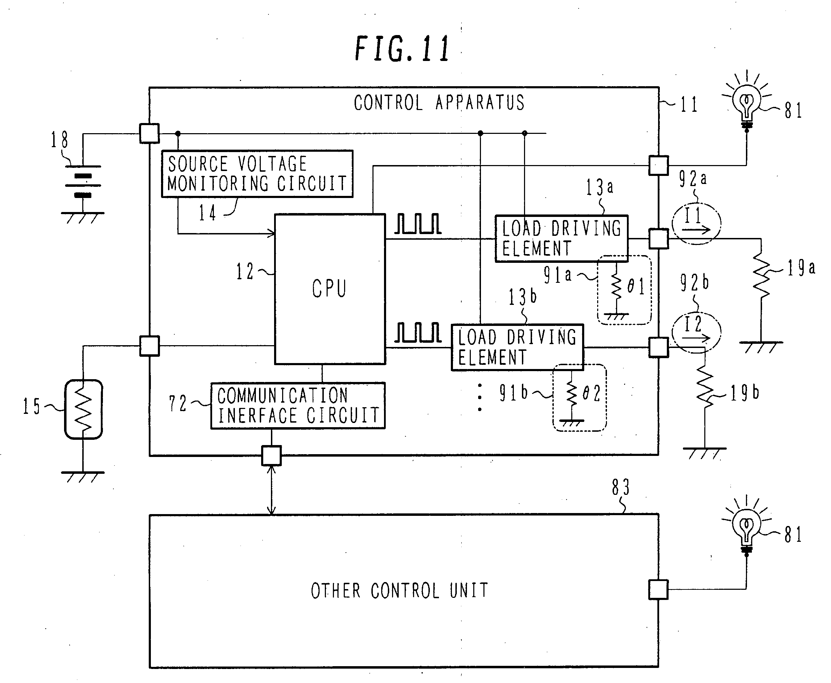

Next, another embodiment of the present invention will be described with reference to Fig. 11. Fig. 11 illustrates a control apparatus according to another embodiment of the present invention. The illustrated embodiment of the present invention will be described below. This embodiment is characterized over the foregoing embodiment of Fig. 9 in that the control apparatus 11 comprises a means for alarming to the remote control apparatus 73 by the user or using a communication circuit when the estimated control apparatus inside temperature TDEV 43 exceeds the upper limit value TOP 33 of the guaranteed operation temperature range defined for the control apparatus 11. It should be understood that this embodiment can also provide similar advantages to those of the embodiment of Fig. 7.

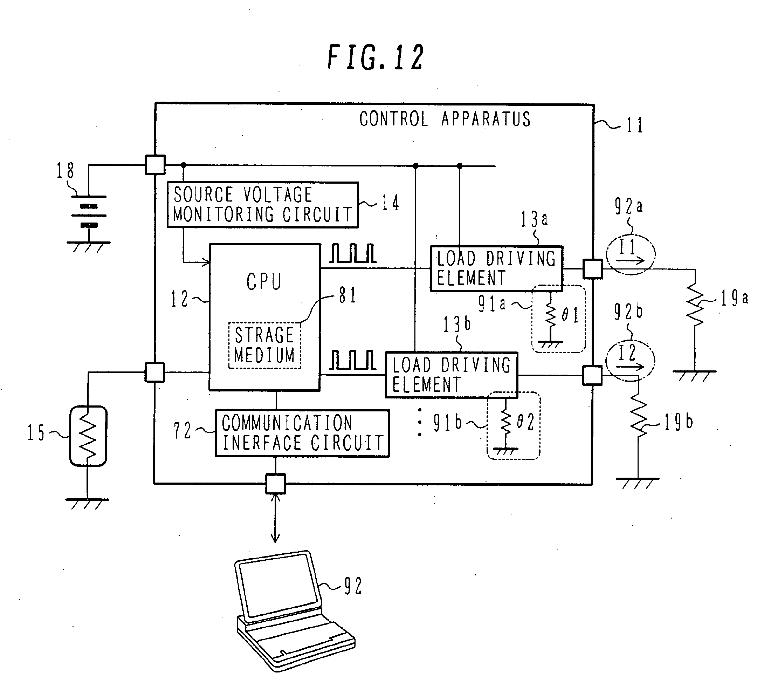

Next, another embodiment of the present invention will be described with reference to Fig. 12. Fig. 12 illustrates a control apparatus according to another embodiment of the present invention. The illustrated embodiment of the present invention will be described below. This embodiment is characterized over the aforementioned embodiment of Fig. 9 in that the control apparatus 11 comprises a means for storing the fail safe information using a storage medium built in a CPU or mounted in the control apparatus 11 when the estimated control apparatus inside temperature TDEV 43 exceeds the upper limit TOP 33 of the guaranteed operation temperature range defined for the control apparatus 11, so that the fail safe information can be confirmed at a later time. It should be understood that this embodiment can also provide similar advantages to those of the embodiment of Fig. 8.

The control apparatus according to the present invention is highly applicable to those products which may be used in a high temperature environment so that the internal temperature of the control apparatus, including heat generated thereby, can exceeds an upper limit value of a guaranteed operation temperature range defined for the control apparatus and requires a transition to a fail safe mode.

The above-described exemplary embodiments can be combined in any way as a whole or in part in order to build up further embodiments optimized for the respective application. As far as such modifications of the above-described embodiments are readily apparent for the skilled person, they shall be disclosed implicitly by the above-described embodiments.

**Claims**

1. A method of operating a control apparatus (11) for driving a load driving element (19) mounted therein to control an external device, said method comprising the steps of:

    storing a thermal resistance parameter (16) of said load driving element (13); and
    switching an operation mode of said control apparatus (11) to a fail safe mode based on an ambient temperature external to said control apparatus (11) and a current conducted to said load driving element (13).

2. A method of operating a control apparatus according to claim 1, wherein said fail safe mode includes reducing the current conducted to said load driving element (13), or breaking a power supply to said control apparatus (11).

3. A method of operating a control apparatus according to claim 1 or 2, wherein said step of switching includes predicting the temperature of said control apparatus (11) based on the ambient temperature external to said control apparatus (11) and the current conducted to said load driving element (13), and switching the operation mode to the fail safe mode when the predicted temperature exceeds a predetermined temperature.

4. A method of operating a control apparatus according to one of claims 1-3, further comprising the step of notifying that said control apparatus (11) is switched to the fail safe mode to the outside.

5. A method of operating a control apparatus according to at least one of claims 1-4, wherein a plurality of said load driving elements (13) are employed, wherein said method further comprises the steps of individually storing thermal resistance parameters of said plurality of load driving elements (13); and reducing a current conducted to at least one of said plurality of loading driving elements (13) in the fail safe mode.

6. A control apparatus for controlling the operation of a device, comprising:

   a temperature sensor (15) for detecting the temperature outside said control apparatus (11) to provide temperature information;
   a CPU (12) for processing the temperature information from said sensor (15) based on a predetermined condition according to a predetermined equation, said CPU (12) being previously aware of a thermal resistance parameter (16) of said control apparatus (11); and
   a load driving element (13) connected to said CPU (12) for driving a load based on the information processed by said CPU (12).

7. A control apparatus according to claim 6, wherein said temperature sensor (15) is not mounted in said control apparatus (11).

8. A control apparatus according to claim 6 or 7, wherein said CPU (12) estimates an increase in temperature of said control apparatus (11) from the temperature external to said control apparatus (11), a load driving condition and the previously known thermal resistance parameter (16) of said controller (11), and sets said control apparatus (11) into a fail safe mode when said CPU (12) determines that said control apparatus (11) has been heated to reach a predetermined temperature or higher.

9. A control apparatus according to at least one of claims 6-8, further comprising means for alarming a user with a lamp (81) and/or a buzzer simultaneously when said CPU (12) sets said control apparatus (11) into the fail safe mode.

10. A control apparatus according to at least one of claims 6-9, further comprising means for storing fault information when said CPU (12) sets said control apparatus (11) into the fail safe mode such that the fault information can be confirmed at a later time.

11. A control apparatus for controlling the operation of a device, comprising:

   a temperature sensor (15) for detecting the temperature external to said control apparatus (11) to provide temperature information;
   a CPU (12) for processing the temperature information from said sensor (15) based on a predetermined condition according to a predetermined equation; and
   a plurality of load driving elements (13) each connected to said CPU (12) for driving a load based on the information processed by said CPU (12), said CPU (12) being previously aware of respective thermal resistance parameters (16) of said plurality of load driving elements (13).

12. A control apparatus according to claim 11, wherein said temperature sensor (15) is not mounted in said control apparatus (11).

13. A control apparatus according to claim 11 or 12, wherein said CPU (12) estimates an increase in temperature of each of said plurality of load driving elements (13), and sets any of said plurality of load driving elements (13) into a fail safe mode when said CPU (12) determines that said load driving element (13) has been heated to a predetermined temperature or higher.

14. A control apparatus according to at least one of claims 11-13, further comprising means for alarming a user with a lamp (81) and/or a buzzer simultaneously when said CPU (12) sets said load driving element (13) into the fail safe mode.

15. A control apparatus according to at least one of claims 11-14, further comprising means for storing fault information when said CPU (12) sets said load driving element (13) into the fail safe mode such that the fault information can be confirmed at a later time.

# FIG.1

CONTROL APPARATUS ~ 11

18

SOURCE VOLTAGE MONITORING CIRCUIT ~ 14

CPU ~ 12

LOAD DRIVING ELEMENT ~ 13

17

19

15

16

EP 1 679 574 A1

# FIG.2

CONTROL APPARATUS 11

18

12

CPU

13

LOAD DRIVING ELEMENT

LOAD DRIVING ELEMENT

13

24

19

19

EP 1 679 574 A1

# FIG.3

# FIG.4

# FIG.5

TBR ⌐32

TOP ⌐33

TDEV ⌐43

ΔT' ⌐51

TOIL ⌐41

ΔT ⌐42

AMBIENT TEMPERATURE T

TIME t

# FIG.6

```
                    START

        CLEAR FAIL SAFE FLAG          ~61
            (FAIL=0)

        MONITOR FOLLOWING PARAMETERS
            SOURCE VOLTAGE V [V],       ~62
            LOAD CURRENT I [A],
            AMBIENT TEMPERATURE TOIL [°C]

        ESTIMATE TEMPERATURE RISE VALUE TDEV
        OF CONTROL APPARATUS            ~63
            ΔT=(V×I)×θ
            TDEV=TOIL+ΔT
```

$\Delta T = (V \times I) \times \theta$

$TDEV = TOIL + \Delta T$

64 — TDEV>TOP — YES

64a — SET CONTROL APPARATUS INTO FAIL SAFE MODE

NO

65 — FAIL=1 — YES

SET FAIL SAFE FLAG TO '1'

64b

NO

66 — STP. ALARM

65a — START ALARM

67 — SET CONTROL APPARATUS INTO NORMAL CONTROL MODE

# FIG.7

CONTROL APPARATUS

SOURCE VOLTAGE MONITORING CIRCUIT ~14

12~ CPU

72~ COMMUNICATION INERFACE CIRCUIT

13 LOAD DRIVING ELEMENT

15

18

11

71

17

19

16

73 OTHER CONTROL UNIT

71

EP 1 679 574 A1

# FIG.8

CONTROL APPARATUS ~11

18

SOURCE VOLTAGE
MONITORING CIRCUIT ~14

CPU ~12

81

STRAGE
MEDIUM

LOAD DRIVING
ELEMENT ~13

17

19

15

COMMUNICATION
INERFACE CIRCUIT ~72

82

θ ~16

EP 1 679 574 A1

# FIG.9

CONTROL APPARATUS ～11

18

SOURCE VOLTAGE
MONITORING CIRCUIT ～14

12  CPU

13a

LOAD DRIVING
ELEMENT

91a～ θ1

13b

LOAD DRIVING
ELEMENT

91b～ θ2

15

92a

I1

19a

92b

I2

19b

EP 1 679 574 A1

# FIG.10

```
                    ┌─────────────┐
                    │    START    │
                    └──────┬──────┘
                           │
                ┌──────────────────────┐
                │ CLEAR FAIL SAFE FLAG  │ ～101
                │     (FAIL=0)          │
                └──────────┬───────────┘
                           │
         ┌─────────────────────────────────┐
         │ MONITOR FOLLOWING PARAMETERS     │
         │   SOURCE VOLTAGE V [V],          │ ～102
         │   LOAD CURRENT I1,I2, ··· IN [A],│
         │   AMBIENT TEMPERATURE TOIL [℃]   │
         └─────────────────┬───────────────┘
```

ESTIMATE TEMPERATURE RISE VALUE TDEV
OF CONTROL APPARATUS
$\Sigma \Delta T$ [℃] $= \Delta T1 + \Delta T2 + \cdots \Delta TN$
$\Delta T1 = (V \times I1) \times \theta 1$
$\Delta T2 = (V \times I2) \times \theta 2$
$\Delta TN = (V \times IN) \times \theta N$
$TDEV = TOIL + \Sigma \Delta T$

～103

104 ～ TDEV>TOP — YES → 104a

NO

105 ～ FAIL=1 — YES

NO

104a SET CONTROL APPARATUS INTO FAIL SAFE MODE

104b SET FAIL SAFE FLAG TO "1"

106 STP ALARM

105a START ALARM

107 SET CONTROL APPARATUS INTO NORMAL CONTROL MODE

# FIG.11

CONTROL APPARATUS ~11

18

SOURCE VOLTAGE
MONITORING CIRCUIT
14

12~ CPU

13a
LOAD DRIVING
ELEMENT
91a~ θ1

13b
LOAD DRIVING
ELEMENT
91b~ θ2

72 COMMUNICATION
INERFACE CIRCUIT

15

92a
I1

92b
I2

81

19a

19b

83

OTHER CONTROL UNIT

81

EP 1 679 574 A1

# FIG.12

CONTROL APPARATUS ~ 11

SOURCE VOLTAGE
MONITORING CIRCUIT ~ 14

18

CPU
12 ~
STRAGE
MEDIUM 81

COMMUNICATION
72 ~ INERFACE CIRCUIT

15

LOAD DRIVING
ELEMENT 13a

91a ~ θ1

LOAD DRIVING
ELEMENT 13b

91b ~ θ2

92a
I1

19a

92b
I2

19b

92

EP 1 679 574 A1

**European Patent Office**

**EUROPEAN SEARCH REPORT**

Application Number

EP 05 01 7966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 460 521 A (ALPS ELECTRIC CO., LTD) 22 September 2004 (2004-09-22) * paragraph [0004] - paragraph [0008]; figures 1,2 * * column 4, line 5 - column 6, line 12 * | 1-3,6-8 | G06F1/20 |
| A | EP 0 651 314 A (INTERNATIONAL BUSINESS MACHINES CORPORATION) 3 May 1995 (1995-05-03) * column 1, line 11 - line 45 * * column 4, line 5 - column 6, line 12 * | 1-15 | |
| A | US 6 704 876 B1 (IACOBOVICI SORIN ET AL) 9 March 2004 (2004-03-09) * column 3, line 66 - column 4, line 27 * * column 5, line 37 - line 58; figures 1,2 * | 1-15 | |
| A | US 6 415 388 B1 (BROWNING CHRIS S ET AL) 2 July 2002 (2002-07-02) * abstract; figure 1 * | 1-15 | TECHNICAL FIELDS SEARCHED (IPC) |
| A | US 5 905 867 A (GIORGIO ET AL) 18 May 1999 (1999-05-18) * abstract * * column 5, line 37 - line 58; figures 1,2 * | 1-15 | G06F |

The present search report has been drawn up for all claims

| Place of search | Date of completion of the search | Examiner |
|---|---|---|
| Munich | 23 February 2006 | Anastassiades, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 1 679 574 A1

## ANNEX TO THE EUROPEAN SEARCH REPORT
## ON EUROPEAN PATENT APPLICATION NO.

EP 05 01 7966

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2006

| Patent document cited in search report | | Publication date | Patent family member(s) | | Publication date |
|---|---|---|---|---|---|
| EP 1460521 | A | 22-09-2004 | JP | 2004287583 A | 14-10-2004 |
| | | | US | 2004195987 A1 | 07-10-2004 |
| EP 0651314 | A | 03-05-1995 | US | 5557551 A | 17-09-1996 |
| US 6704876 | B1 | 09-03-2004 | AU | 9124201 A | 08-04-2002 |
| | | | EP | 1352314 A2 | 15-10-2003 |
| | | | JP | 2004510241 T | 02-04-2004 |
| | | | WO | 0227450 A2 | 04-04-2002 |
| US 6415388 | B1 | 02-07-2002 | AU | 1118400 A | 22-05-2000 |
| | | | EP | 1145095 A1 | 17-10-2001 |
| | | | JP | 2002529806 T | 10-09-2002 |
| | | | TW | 514772 B | 21-12-2002 |
| | | | WO | 0026747 A1 | 11-05-2000 |
| US 5905867 | A | 18-05-1999 | NONE | | |

EPO FORM P0459

For more details about this annex : see Official Journal of the European Patent Office, No. 12/82